# EUROPEAN PATENT APPLICATION

(11) **EP 3 954 234 A1**
(43) Date of publication of application: **16.02.2022**
(21) Application number: 20190249.1
(22) Date of filing: 10.08.2020
(51) Int. Cl.: A24F 40/40, A24F 40/60, G08B 6/00, G06F 3/01

(54) **AEROSOL GENERATING DEVICE WITH A VIBRATION GENERATOR**

(71) Applicant: JT International SA, 1202 Geneva (CH)
(72) Inventor: Adair, Kyle Robert, Lisburn, Antrim BT28 2UW (GB); Popoola, Olayiwola, Walton-on-Thames, KT12 2SJ (GB); Loveday, Peter, Woking, GU21 2EL (GB)
(74) Representative: Hoffmann Eitle

(57) **Abstract**

An aerosol generating device comprises:
- an outside casing;
- a main electronic circuit board (PCB; 12) arranged in the casing;
- a vibration generator (14) arranged between the casing and the electronic circuit board (12) to provide haptic feedback to a user;
wherein the vibration generator (14) is a generally plate- or disc-shaped linear resonant actuator (LRA; 14) positioned between the casing and the main electronic circuit board (PCB; 12) and the linear resonant actuator (14) comprises a front surface (28) and a rear surface (20) representing the large surfaces of the generally plate- or disc-shaped linear resonant actuator (LRA; 14), the front surface (28) facing in a direction, where electrical connection from the linear resonant actuator (LRA; 14) to the main electronic circuit board (12) is made, and the linear resonant actuator (14) being mounted on the casing or a chassis (26) provided in the casing via the rear surface (20) of the LRA.

## Description

### Cross reference

Any features essential to the applications titled "SHOCK ABSORPTION IN A HANDHELD AEROSOL GENERATION DEVICE", "AEROSOL GENERATING DEVICE WITH A SEALED CHAMBER FOR ACCOMODATING A BATTERY", "AEROSOL GENERATING DEVICE" and "AEROSOL GENERATING DEVICE WITH LIP SEAL FOR BATTERY DEGASSING MITIGATION" all filed August 10, 2020, such as the claims thereof, and/or contained therein and corresponding to and/or relating to features of the present application are incorporated herein by this reference and can be combined with feature combinations disclosed herein in order to provide an improved aerosol generating device, and protection may be sought for the resulting feature combinations.

### Technical field

The invention relates to an aerosol generating device, such as an electronic cigarette.

### Background

In recent years, there is a tendency among consumers to replace conventional cigarettes by aerosol generating devices, for which it is desired to provide haptic feedback to the user, for example by means of vibrations.

In this context, US 2017/0119052 A1 is related to an aerosol generating device with a vibrator motor. However, such a motor rotates an eccentric mass meaning that it takes some time to speed up and slow down the mass, so that the feedback is not perceived as direct and/or immediate and/or "crisp". Moreover, the rotating mass limits the possibilities different vibration patterns and of arranging the vibrator in an aerosol generating device. Moreover, WO 2020/008028 A1 is related to an aerosol generating device having a haptic element which can be a linear resonant actuator.

### Summary of the invention

In view of the above, it is an object underlying the invention to provide an aerosol generating device with a vibrator or haptic element, which is easy to mount in the aerosol generating device and/or provides crisp feedback and/or enables a wide range of haptic feedback.

This object is solved by means of the subject-matter of claim 1. Preferred embodiments are described in the further claims.

Accordingly, the aerosol generating device described herein comprises an outside casing and a main electronic circuit board which is arranged in the casing. A vibration generator is arranged between the casing and the electronic circuit board and is provided as a generally plate- or disc-shaped linear resonant actuator (LRA). Being plate- or disc-shaped, the LRA has a front and a rear surface, which represent the large surfaces of the LRA. Further surfaces of the LRA are generally strip-shaped in case of a plate-shape or flat cylinder-shaped in case of a disc-shape.

In the present context, the front surface of the LRA faces in a direction, where electrical connection from the LRA to the main electronic board is made, and the LRA is mounted to the case or a chassis provided in the casing via the rear surface of the LRA. It should be mentioned, that the mounting described herein is essentially opposite to the conventional mounting, where the LRA is fixed via its front surface, i.e. the surface facing the direction of electrical connections. By means of the particularly unconventional mounting described herein, various advantageous effects can be obtained.

Firstly, the use of the LRA as the vibration generator leads to effective haptic feedback which is felt as "crisp" by the user. Moreover, the LRA provides a wide range of haptic feedback signals and, moreover, allows a mounting orientation of the LRA, which can be freely chosen, as it has been proven that humans cannot detect the differences in haptic feedback directions. In other words, an LRA provides effective haptic feedback essentially independent from its mounting orientation. Moreover, by means of the invention, the use of internal space in an aerosol generating device is optimized, and (automated) production thereof is facilitated. Further, the mounting location can be chosen more freely, and wiring and soldering can be minimized or avoided as detailed below.

This is essentially achieved by making use of the rear surface of the LRA, in other words the surface opposite the side of electrical connection, for mounting the LRA. This can be done by mounting the LRA to a casing which is split into two or more portions. Moreover, a chassis can be provided, which is, when assembling the aerosol generating device, inserted into the casing and carries, amongst other things, the LRA mounted to the chassis via its rear surface. Such a chassis can be combined with a seamless casing having an opening for inserting the chassis.

It should also be mentioned that the LRA can advantageously be separate from the main electronic circuit board (PCB), so that space of the PCB is freed, or the PCB can be reduced in size. The described mounting of the LRA saves time during assembly and increases reliability. Further, negative effects on the PCB due to vibration can be avoided. Moreover, the LRA advantageously has a longer lifecycle than conventional vibration motors.

In some embodiments, the LRA is fixed to the casing or the chassis via an adhesive layer, such as an adhesive pad. Such a layer ensures the necessary fixation and is, at the same time, easily mounted.

In some embodiments, electrical connectors are specifically provided on the rear surface of the LRA so as to face the same direction as the front surface thereof and are electrically connected to the PCB by contact with electrical connectors such as pogo pins mounted on the PCB. As will be described in more detail below, for forming the electrical connectors of the LRA, the component, such as a sheet metal plate, forming the rear surface of the LRA can be extended beyond the disc- or plate-shape so as to provide an opposite surface facing in the same direction as the front surface, on which the electrical connectors can be formed, for example as shallow pads or tabs. These can advantageously be in direct electrical connection with the connectors provided on the PCB.

Thus, the electrical connectors of the LRA can advantageously be flat and simply pressed against the electrical connectors of the PCB without soldering or any other measures providing electrical connection.

In some embodiments, the LRA is arranged such that its front surface faces the PCB with a gap in-between reflecting the advantageous arrangement described herein, in which the LRA is separate from the PCB.

In some embodiments, in order to ensure reliable vibration provided by the LRA, the LRA is received in a seat of the casing or chassis, which is configured to position the LRA in a predetermined position and to prevent the LRA from moving in at least two perpendicular directions. In this manner, vibrations of the LRA can effectively be transmitted to the chassis and/or casing so as to provide the desired haptic feedback to the user.

In line with the finding, that the human user can generally not differentiate between different haptic feedback directions, the LRA can advantageously be used most efficiently by being configured to generate vibration along an axis perpendicular to the front and rear surface thereof.

In some embodiments, the PCB advantageously provides AC signals to drive the LRA so as to generate vibrations.

In some embodiments, the PCB comprises a host processor and a haptic feedback driver with a smart-loop-architecture to communicate with the host processor, which generates commands of patterns for controlling vibration patterns of the LRA. In this manner, vibration patterns can be provided with a high degree of flexibility.

### Brief description of the drawings

Hereinafter, the invention will be described with reference to an exemplary embodiment, in which
- Fig. 1: shows a part of the interior of an aerosol generating device; and
- Fig. 2: shows a chassis of an aerosol generating device with an LRA and electrical connectors of the PCB.

### Detailed description of an embodiment

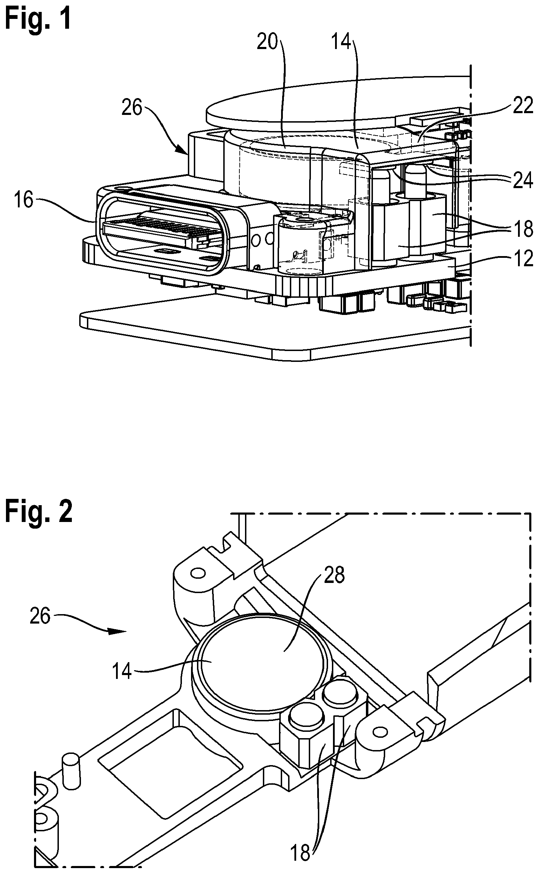

Fig. 1 shows a part of the interior of an aerosol generating device, such as a PCB 12 and an LRA 14. In the embodiment shown, a USB socket 16 is mounted on the PCB 12 together with further components, which are not visible in Fig. 1. In order to establish electrical connection to the LRA 14, pogo pins 18 are mounted to the PCB 12 and extend essentially vertically in the orientation of Fig. 1 and preferably on a side of the LRA.

As can be seen in Fig. 1, the LRA 14 is essentially disc-shaped with a rear surface 20 facing upwards in the orientation shown in Fig. 1 and a front surface not visible in Fig. 1 and facing downwards, in other words towards the electrical connectors 18 of the PCB. In order to establish electrical connection, the sheet metal plate constituting the rear surface 20 is essentially extended laterally, in the plane of the rear surface 20, so as to form an essentially rectangular tap 22, the lateral sides of which are, in the embodiment shown, slightly bent towards the front surface.

On the front surface 28 (see Fig. 2) two flat contacts 24 are formed as electrical connectors configured to be pressed against the pogo pins 18 so as to make direct electrical contact. The flat contacts may be part of a flexible electrically insulating (e.g. polyimide) board e.g. flexible printed circuit (FLEX PCB). The support is preferably adhesively fixed to the rectangular tap 22 serving as support for the flexible board. As described herein, the LRA 14 is fixed to a chassis 26 via its rear surface 20, for example by means of an adhesive layer, in particular an adhesive pad.

Fig. 2 shows the chassis 26 from the front surface 28 of the LRA 14, in other words from the underside in the orientation of Fig. 1. As can be taken from Fig. 2, the LRA 14 is accommodated in an appropriate seat of the chassis 26 so as to prevent movement in two perpendicular directions which are essentially parallel to the front surface 28. Towards the right side of the LRA 14, the pogo pins 18 mounted to the PCB (not shown) are visible. In Fig. 2, the pogo pins 18 are shown inserted into sockets of the chassis 26 for accurate positioning thereof.

## Claims

1. An aerosol generating device comprising:
- an outside casing;
- a main electronic circuit board (PCB; 12) arranged in the casing;
- a vibration generator (14) arranged between the casing and the electronic circuit board (12) to provide haptic feedback to a user;
wherein the vibration generator (14) is a generally plate- or disc-shaped linear resonant actuator (LRA; 14) positioned between the casing and the main electronic circuit board (PCB; 12) and the linear resonant actuator (14) comprises a front surface (28) and a rear surface (20) representing the large surfaces of the generally plate- or disc-shaped linear resonant actuator (LRA; 14), the front surface (28) facing in a direction, where electrical connection from the linear resonant actuator (LRA; 14) to the main electronic circuit board (12) is made, and the linear resonant actuator (14) being mounted on the casing or a chassis (26) provided in the casing via the rear surface (20) of the LRA.

2. The aerosol generation device of claim 1, wherein the linear resonant actuator (14) is fixed to the casing or the chassis (26) via an adhesive layer.

3. The aerosol generation device of claim 1 or 2, wherein the LRA comprises electrical connectors (24) on the rear surface (20) facing the same direction as the front surface (28), which are electrically connected to the main electronic circuit board (12) by contact with electrical connectors (18), such as pogo pins mounted onto the main electronic circuit board (PCB; 12).

4. The aerosol generation device according to claim 3, wherein the electrical connectors (24) of the LRA are flat and pressed against the electrical connectors (18) of the main electronic circuit board (12) without soldering.

5. The aerosol generation device of any one of claims 1 to 4, wherein the LRA is arranged with its front surface (28) facing the electronic circuit board (12) with a gap in-between.

6. The aerosol generation device of any one of claims 1 to 5, wherein the LRA is received in a seat of the casing or chassis (26) configured to position the LRA in a predetermined position and prevent the LRA from moving in at least two perpendicular directions.

7. The aerosol generation device of any one of the preceding claims, wherein the LRA is configured to generate vibration along an axis perpendicular to the front surface (28) and the rear surface (20).

8. The aerosol generation device of any of the preceding claims, wherein the main electronic board (PCB; 12) provides AC signals to drive the LRA to generate vibration.

9. The aerosol generation device of any of the preceding claims, wherein the main electronic circuit board (12) comprises a host processor and a haptic feedback driver with a smart-loop architecture to communicate with the host processor, the host processor generating commands of patterns for controlling vibration patterns of the LRA.
